# EUROPEAN PATENT APPLICATION

(11) **EP 2 618 591 A1**
(43) Date of publication of application: **24.07.2013**
(21) Application number: 12178817.8
(22) Date of filing: 01.08.2012
(51) Int. Cl.: H04N 21/436, H04N 21/4408, H04N 21/4627

(54) **Electronic apparatus and content transfer method**

(30) Priority: 20.01.2012 JP 2012010319
(71) Applicant: Kabushiki Kaisha Toshiba, Tokyo 105-8001 (JP)
(72) Inventor: Hirayama, Noriyuki, Tokyo, Tokyo 105-8001 (JP)
(74) Representative: Henkel, Breuer & Partner

(57) **Abstract**

According to one embodiment, an electronic apparatus (1) includes a content transfer module (100) configured to transfer copyright protected content. The content transfer module is configured to apply a first copyright protection method to protect a copyright of the content, when the content transfer module transfers the content at a quality level exceeding a threshold, and apply a second copyright protection method to protect the copyright of the content, when the content transfer module transfers the content at a quality level not more than the threshold.

## Description

Embodiments described herein relate generally to a transfer technique of content, the copyright of which is to be protected.

In recent years, electronic apparatuses such as personal computers and smartphones, which can handle digital video and audio data, have prevailed. An electronic apparatus of this type generally incorporates a data communication function, and can exchange so called audiovisual content with other electronic apparatuses.

On the other hand, much audiovisual content requires copyright protections (for example, their copies are limited). For this purpose, various mechanisms required to exchange audiovisual content among a plurality of electronic apparatuses while attaining copyright protections have been proposed so far.

As a method of protecting video or audio copyrights, for example, the High-bandwidth Digital Content Protection (HDCP) system is known. Also, as a method of protecting audio copyrights, for example, the Serial Copy Management System (SCMS) is known. HDCP requires encryption of copyright protection target data, and SCMS does not require any encryption of copyright protection target data. Therefore, HDCP has a higher copyright protection strength than that of SCMS, but SCMS has a lighter load on copyright protection processing than that of HDCP.

A case will be examined wherein, for example, an electronic apparatus A (content transmitter) transfers audiovisual content to an electronic apparatus B (content receiver), and electronic apparatus B further transfers audio data in that audiovisual content to an electronic apparatus C (audio player). Also, assume that since electronic apparatus C does not support HDCP, SCMS is applied to the audio data to protect its copyright upon transferring the audio data from electronic apparatus B to electronic apparatus C.

In this case, even when both electronic apparatuses A and B support HDCP, since the fact that the audio data is then transferred while being applied with SCMS having a lower protection strength is taken into consideration (and if electronic apparatus A supports SCMS), application of SCMS to the audio data to be transferred from electronic apparatus A to electronic apparatus B should be taken into consideration in preference to a load reduction as in the audio data transfer between electronic apparatuses B and C. Note that it is possible to transfer video data and audio data in a single audiovisual content item by applying different copyright protection methods to these data. It is preferable to always apply HDCP to video data so as to protect its copyright in preference to a higher protection strength.

A general architecture that implements the various features of the embodiments will now be described with reference to the drawings. The drawings and the associated descriptions are provided to illustrate the embodiments and not to limit the scope of the invention.
FIG. 1 is an exemplary view showing the system arrangement of a content transfer system according to an embodiment.
FIG. 2 is an exemplary schematic block diagram showing the arrangement of a content transmitter in the content transfer system according to the embodiment.
FIG. 3 is an exemplary schematic block diagram showing the arrangement of a content receiver in the content transfer system according to the embodiment.
FIG. 4 is an exemplary flowchart showing the operation sequence on the content transmitter side of the content transfer system according to the embodiment.
FIG. 5 is an exemplary flowchart showing the sequence of arbitration processing between an audio quality level and copyright protection method to be executed by the content transmitter of the content transfer system according to the embodiment.
FIG. 6 is an exemplary flowchart showing the operation sequence on the content receiver side of the content transfer system according to the embodiment.

Various embodiments will be described hereinafter with reference to the accompanying drawings.

In general, according to one embodiment, an electronic apparatus includes a content transfer module configured to transfer copyright protected content. The content transfer module is configured to apply a first copyright protection method to protect a copyright of the content, when the content transfer module transfers the content at a quality level exceeding a threshold, and apply a second copyright protection method to protect the copyright of the content, when the content transfer module transfers the content at a quality level not more than the threshold.

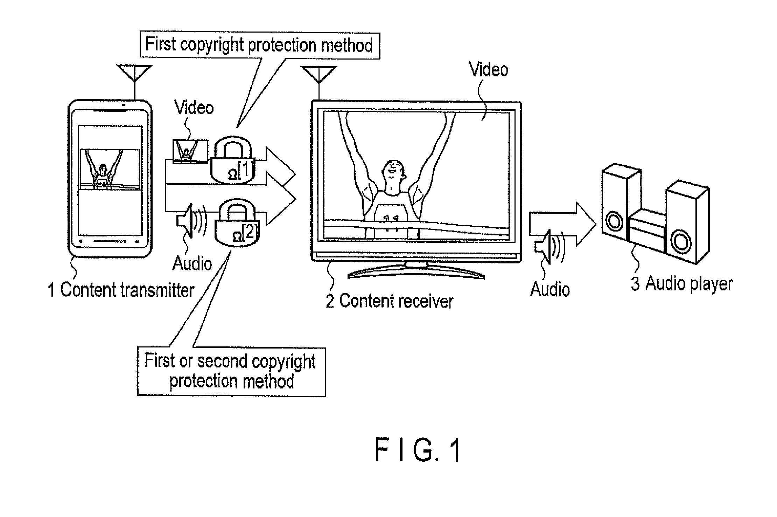

FIG. 1 is an exemplary view showing the system arrangement of a content transfer system according to this embodiment.

As shown in FIG. 1, the content transfer system of this embodiment includes a content transmitter 1, content receiver 2, and audio player 3. Assume that the content transmitter 1 and content receiver 2 are connected via, for example, a wireless LAN (Wi-Fi) compliant with the IEEE 802.11 standard. Also, assume that the content receiver 2 and audio player 3 are connected via, for example, an S/PDIF.

The content transmitter 1 is, for example, a portable personal computer, and includes, for example, a Blu-ray (registered trademark) Disc drive. The content transmitter 1 reads and plays back content from a Blu-ray (registered trademark) Disc loaded in the Blu-ray (registered trademark) Disc drive, and outputs it to a display, loudspeakers, and the like. The content transmitter 1 includes a content transfer function of encoding the played back content (video data to be output to the display and the like and audio data to be output to the loudspeakers and the like), and transferring the encoded content to the content receiver 2 via the wireless LAN (Wi-Fi). The user can arbitrarily set an audio quality level at this encoding timing.

The content receiver 2 is, for example, a television receiver. The content receiver 2 decodes the (encoded) content received from the content transmitter 1 and displays an image on its screen. The content receiver 2 can output sound from built in loudspeakers. In this case, however, assume that the content receiver 2 transfers audio data to the audio player 3 via the S/PDIF to output that audio data from the audio player 3. The user can also arbitrarily set an audio quality level at this output timing.

A data format of the content transferred between the content transmitter 1 and content receiver 2 is, for example, the MPEG2 TS format, and a transfer protocol is, for example, the Real time Transport Protocol (RTP). As a copyright protection method required to protect video Elementary Stream (ES), for example, the HDCP 2.0 or subsequent standard is applied. On the other hand, as a copyright protection method to protect audio ES, for example, two types of methods, that is, the HDCP 2.0 or subsequent standard and SCMS are applicable. The content transfer system of this embodiment is allowed to select appropriate one of the two types of copyright protection methods as that used to protect the audio ES, as needed, and this point will be described in detail below.

Note that SCMS itself does not prescribe any method of notifying copy control information on a wireless LAN. However, for example, the notification can be attained by a method (a) of notifying the copy control information by inserting a registration_descriptor prescribed in HDCP 2.0 in a Program Map Table (PMT), a method (b) of notifying the copy control information via a communication based on the Real Time Streaming Protocol (RTSP) or the like, and so forth, as disclosed in Japanese Patent Application No. 2011-189374 filed by the present applicant.

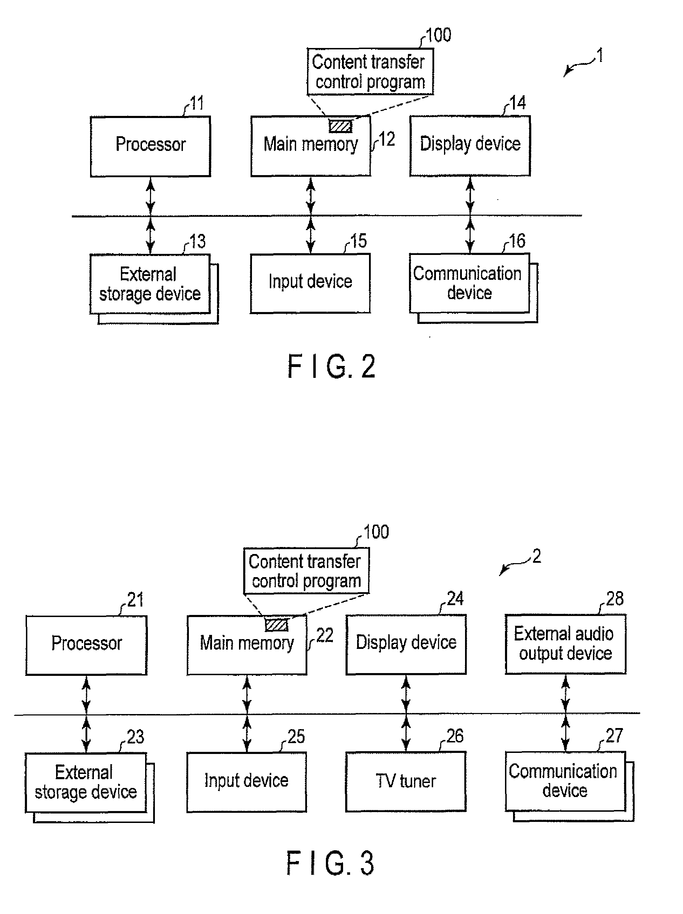

The arrangements of the content transmitter 1 and content receiver 2 will be described with reference to FIG. 2 and FIG. 3.

FIG. 2 is an exemplary schematic block diagram showing the arrangement of the content transmitter 1. As shown in FIG. 2, the content transmitter 1 includes a processor 11, main memory 12, external storage device 13, display device 14, input device 15, communication device 16, and the like.

The processor 11 is a module which executes operation control of the content transmitter 1, and controls the content transmitter 1 to function as various modules by loading and executing various programs from the external storage device 13 onto the main memory 12. Various programs include a content transfer control program 100 which executes content transfer control. As the external storage device 13, for example, a hard disk drive (HDD), solid-state drive (SSD), or the like is available in addition to the aforementioned Blu-ray (registered trademark) Disc drive.

The display device 14 is a module which assumes the output side of a user interface provided by the content transmitter 1. On the other hand, the input device 15 is a module which assumes the input side of the user interface provided by the content transmitter 1. That is, the input device 15 accepts a user instruction, various programs execute processes according to this instruction, and the processing result is presented on the display device 14.

The communication device 16 is a module which executes wireless data communications via the aforementioned wireless LAN. In addition, a module which executes wired data communications via, for example, a LAN is available as the communication device 16.

FIG. 3 is an exemplary schematic block diagram showing the arrangement of the content receiver 2. Only differences from the content transmitter 1 will be roughly explained below. As shown in FIG. 3, the content receiver 2 includes a TV tuner 26 used to receive television broadcast program data. Also, the content receiver 2 includes an external audio output device 28 which outputs audio data via the aforementioned S/PDIF.

The content receiver 2 also includes a content transfer control program 100 as one of various programs, which are loaded from an external storage device 23 onto a main memory 22 and are executed by a processor. That is, the content transfer control program 100 includes two routines, that is, a routine for controlling an electronic apparatus as an installation destination to serve as the content transmitting side, and a routine for controlling an electronic apparatus as an installation destination to serve as the content receiving side. For example, the content receiver 2 may be controlled by the content transfer control program 100 to serve as the content receiving side with respect to the content transmitter 1, and to simultaneously serve as the content transmitting side with respect to the audio player 3.

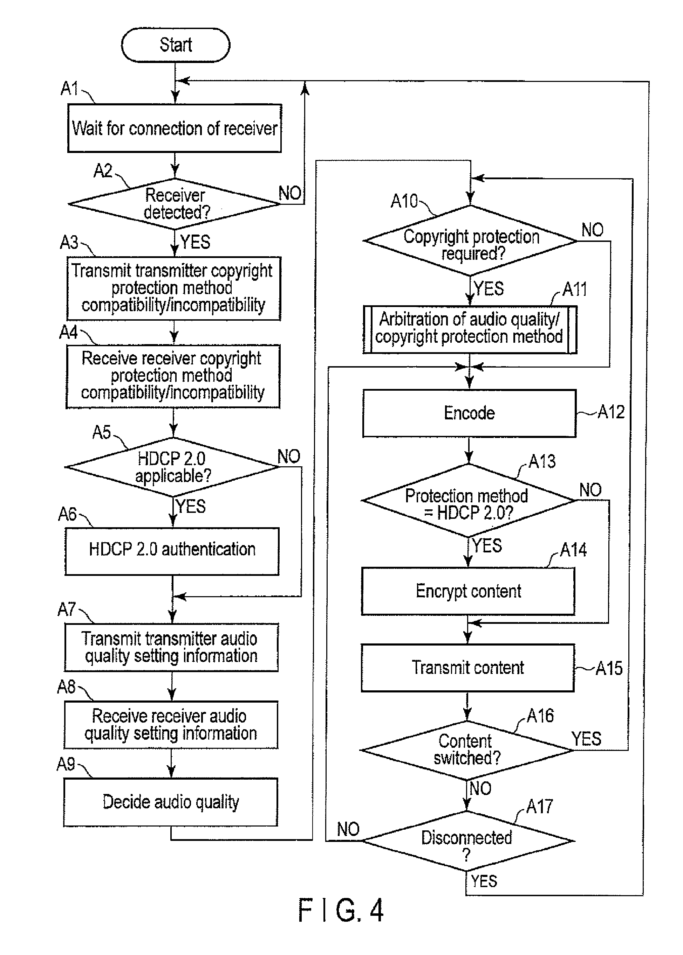

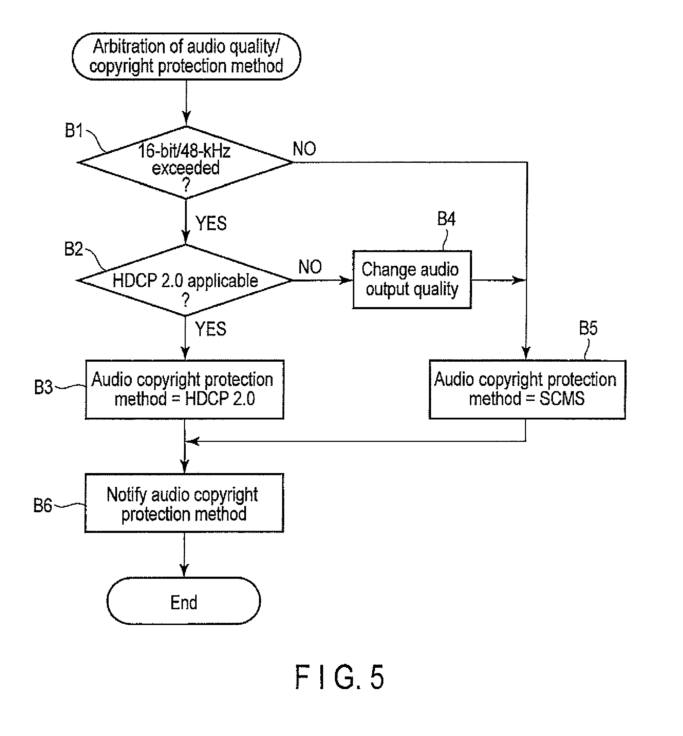

The operations on the content transmitter 1 side of the sequence from when the content transmitter 1 transmits audio data until the content receiver 2 plays back the audio data in the content transfer system according to this embodiment will be described below with reference to FIG. 4 and FIG. 5. Note that video data is applied with the HDCP 2.0 or subsequent standard to appropriately protect its copyright independently of the audio data, and is then transferred between the content transmitter 1 and content receiver 2.

After the power supply of the content transmitter 1 is turned on, when the content transfer control program 100 is activated by a user operation, the content transmitter 1 (whose operations are controlled by the processor 11 according to the procedures described in the content transfer control program 100) waits for a connection with the content receiver 2 via the Wi-Fi (block A1). After the connection with the content receiver 2 is established (YES in block A2), the content transmitter 1 transmits 8-bit data indicating compatibility/incompatibility with various copyright protection methods of the self apparatus (content transmitter 1) to the content receiver 2 (block A3).

In this case, assume that as the format of the 8-bit data, the most significant bit indicates the HDCP 2.0 compatibility/incompatibility of video data, the 5th bit indicates that of audio data, the 6th bit indicates SCMS compatibility/incompatibility of audio data, and the remaining bits are reserved (0). When the apparatus is compatible with a copyright protection method associated with a certain bit, that bit value is 1 (0 in case of incompatibility). Note that this 8-bit data format is merely an example, and data having any other formats are applicable as long as they can indicate compatibility/incompatibility with copyright protection methods. In this embodiment, assume that the content transmitter 1 is compatible with the HDCP 2.0 as the copyright protection method of video data, and is compatible with both the HDCP 2.0 and SCMS as the copyright protection methods of audio data. Hence, the content transmitter 1 transmits the 8-bit data 10001100 to the content receiver 2.

Next, the content transmitter 1 receives 8 bit data indicating compatibility/incompatibility with copyright protection methods of the content receiver 2 (block A4). In this embodiment, assume that the content receiver 2 is also compatible with the HDCP 2.0 as the copyright protection method of video data, and is compatible with both the HDCP 2.0 and SCMS as the copyright protection methods of audio data. Hence, the content transmitter 1 receives the 8-bit data 10001100 from the content receiver 2. In other words, the content receiver 2 transmits, to the content transmitter 1, data indicating whether or not it can execute processing (decode processing and the like) of data, which has undergone copyright protection (encryption) by the HDCP 2.0 and can execute processing of data, which has undergone copyright protection by SCMS in association with video and audio data.

The content transmitter 1 logically ANDs the 8-bit data transmitted to the content receiver 2 and that received from the content receiver 2, and determines copyright protection methods applicable to a combination of the content transmitter 1 and content receiver 2 (block A5). In this embodiment, the ANDing yields 10001100, and it is determined that the HDCP 2.0 is applicable to video data, and both HDCP 2.0 and SCMS are applicable to audio data.

For example, when the 8-bit data transmitted from the content transmitter 1 is 10000100 and that received from the content receiver 2 is 10001100, their ANDing yields 10000100, and it is determined that the HDCP 2.0 is applicable to video data, and only SCMS is applicable to audio data.

If the HDCP 2.0 is applicable as the copyright protection method to one or both of video and audio data (YES in block A5), the content transmitter 1 executes authentication and key exchange processes according to the HDCP 2.0 with the content receiver 2 (block A6). Then, some of encryption keys and initial vectors (IV) of video data ES and audio data ES upon transferring copyright protected content (content whose copyright is required to be protected) are decided.

The content transmitter 1 transmits audio quality setting information at the encoding timing of the self apparatus (content transmitter 1) to the content receiver 2 (block A7), and receives audio output quality setting information of the content receiver 2 from the content receiver 2 (block A8). The content transmitter decides an audio quality level upon actually encoding content based on the audio quality setting information at the encoding timing of the self apparatus (content transmitter 1) and the audio output quality setting information received from the content receiver 2 (block A9). The audio quality decision method may prioritize an audio quality setting at the encoding timing on the content transmitter 1 side, or that upon outputting audio data on the content receiver 2 side. Alternatively, the two pieces of information may be compared to decide a higher or lower audio quality level.

When audio data is transferred in the aforementioned route [electronic apparatus A (content transmitter) -> electronic apparatus B (content receiver) -> electronic apparatus C (audio player)], and when SCMS is applied between electronic apparatuses B and C, it is also applied between electronic apparatuses A and B (although the HDCP 2.0 is applicable) in preference to a load reduction. This case corresponds to that in which the audio quality setting at the audio output timing on the content receiver 2 side is prioritized.

Block A10 and subsequent blocks (to be described later) indicate the sequence until the content transmitter 1 encodes the content, and transmits it to the content receiver 2.

In the basic sequence, the content transmitter 1 respectively encodes video data to be output to the screen of the self apparatus (content transmitter 1) and audio data to be output to loudspeakers or the like (block A12), multiplexes the encoded video and audio data in the MPEG2 TS format, and transmits the multiplexed data using the RTP (block A15) until the connection with the content receiver 2 is disconnected (YES in block A17). However, if content to be output to the screen is switched, for example, when a content playback application is activated or a disk is exchanged (YES in block A16), the content transmitter 1 determines whether or not copyright protection is required (block A10). If the copyright protection is required (YES in block A10), the content transmitter 1 executes copyright protection processing, and transmits processed data.

When the content transmitter 1 outputs, for example, Blu-ray (registered trademark) Disc content, which is copyright protected by the Advanced Access Control System (AACS) to the screen, it determines that the copyright protection is required. When it is determined that the copyright protection is required, the copyright protection method for video data is HDCP 2.0. On the other hand, the copyright protection method for audio data is one of HDCP 2.0 and SCMS, and an audio quality level and copyright protection method for audio data are decided by the following sequence shown in FIG. 5 (block A11).

If the audio quality level decided by exchanging the audio quality information exceeds one of 16 quantization bits and a sampling frequency of 48 kHz (YES in block B1), the content transmitter 1 cannot transmit that data by a method other than HDCP 2.0. Note that the 16 quantization bits and sampling frequency of 48 kHz are border values according to the digital audio output stipulations in the AACS Adopter Agreement (http://www.aacsla.com/license/). If HDCP 2.0 is applicable (YES in block B2) in the aforementioned copyright protection method compatibility/incompatibility determination processes (blocks A3 to A5 in FIG. 4) (YES in block B2), the content transmitter 1 decides HDCP 2.0 as the copyright protection method of audio data (block B3).

On the other hand, if HDCP 2.0 is not applicable (NO in block B2), the content transmitter 1 changes the audio quality level to that corresponding to the 16 quantization bits and sampling frequency of 48 kHz (block B4), and decides SCMS as the copyright protection method of audio data (block B5). Note that the content transmitter 1 can operate to select one of two types of audio data, that is, high and low quality audio data which are prepared in advance, and to transmit the selected audio data to the content receiver 2. That is, if HDCP 2.0 is applicable in block B2, the content transmitter 1 may select high quality audio data; otherwise, it may select low quality audio data.

If the audio quality level decided by exchanging the audio quality information is less than or equal to that corresponding to the 16 quantization bits and sampling frequency of 48 kHz (NO in block B1), the content transmitter 1 decides SCMS as the copyright protection method of audio data (block B5).

The content transmitter 1 notifies the content receiver 2 of the copyright protection method of audio data decided by the aforementioned sequence (block B6).

Note that the AACS (adopted by Blu-ray (registered trademark) Discs) does not require any copyright protection for audio data having an audio quality level of the 16 quantization bits or less and the sampling frequency of 48 kHz or less. However, the Content Scrambling System (CSS) adopted by Digital Versatile Discs (DVDs) prescribes that an arbitrary audio quality level is allowed when the copyright protection method of audio data is HDCP 2.0, but a low audio quality level (less than or equal to the border values of an audio quality level) should be set when the copyright protection method of audio data is SCMS. In consideration of the above prescriptions, assume that when the number of quantization bits is less than or equal to 16 and the sampling frequency is less than or equal to 48 kHz, SCMS is adopted as the copyright protection method of audio data.

In this embodiment, the border values of the audio quality level are the 16 quantization bits and the sampling frequency of 48 kHz according to the digital audio output stipulations in the AACS Adopter Agreement. However, the border values of the audio quality level are different depending on the copyright protection stipulations of content to be output by the content transmitter 1 to the screen of the self apparatus (content transmitter 1).

Referring back to FIG. 4, if the copyright protection method of audio data decided by the aforementioned sequence is HDCP 2.0 (YES in block A13), the content transmitter 1 encrypts the encoded content according to HDCP 2.0 requirements (block A14), multiplexes the encrypted content in the MPEG2 TS format, and transmits the multiplexed content to the content receiver 2 using the RTP (block A15).

On the other hand, if the copyright protection method of audio data decided by the aforementioned sequence is SCMS (NO in block A13), the content transmitter 1 does not encrypt the content and notifies the content receiver 2 of copy control information by a predetermined method, multiplexes the encoded content in the MPEG2 TS format, and transmits the multiplexed content to the content receiver 2 using the RTP (block A15).

If no copyright protection is required (NO in block A10), the content transmitter 1 multiplexes the encoded content in the MPEG2 TS format intact, and transmits the multiplexed content to the content receiver 2 using the RTP. Note that if no copyright protection is required, since that content is "Copy Free" content, the content transmitter 1 may notify the content receiver 2 of copy control information = "Copy Free".

In this way, (1) the content transmitter 1 determines applicable copyright protection methods based on the compatibility/incompatibility with copyright protection methods of the self apparatus (content transmitter 1) and the compatibility/incompatibility with copyright protection methods of the content receiver 2. (2) The content transmitter 1 decides an audio quality level based on the audio quality setting information at the encoding timing of the self apparatus (content transmitter 1) and the audio output quality setting information of the content receiver 2. (3) The content transmitter 1 decides an actual audio quality level and copyright protection method based on the applicable copyright protection methods and audio quality level. That is, content, the copyright of which is required to be protected, can be transferred by applying an appropriate copyright protection method to that content.

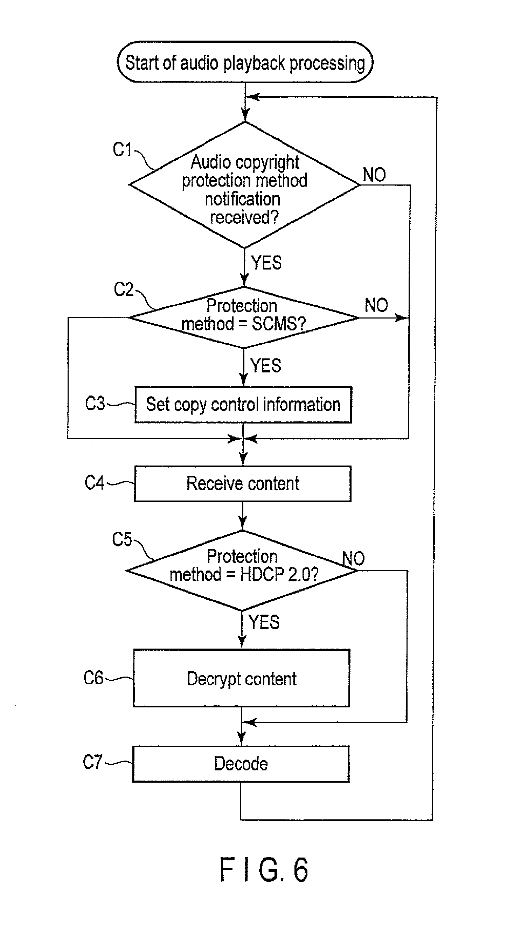

The sequence until the content receiver 2 plays back audio data transferred from the content transmitter 1 in the content transfer system of this embodiment will be described below with reference to FIG. 6. Note that the content receiver 2 determines whether or not video data is copyright protected according to HDCP 2.0 requirements, and if the video data is copyright protected, it decrypts (deciphers) the encrypted data according to HDCP 2.0 requirements, decodes the decrypted data, and then outputs the decoded data to the screen of the self apparatus (content receiver 2).

If the content receiver 2 receives the copyright protection method decided by the content transmitter 1 from the content transmitter 1 (YES in block C1), it makes copy control settings (block C3) according to the received copyright protection method (block C2). If the content receiver 2 does not receive any copyright protection method from the content transmitter 1 (NO in block C1), it determines that the content is "Copy Free" content.

The content receiver 2 receives the content from the content transmitter 1 using the RTP (block C4). If the notified copyright protection method is HDCP 2.0 (YES in block C5), the content receiver 2 decrypts (deciphers) the content according to HDCP 2.0 requirements (block C6), decodes the decrypted content (block C7), and outputs audio data. On the other hand, if the notified copyright protection method is not HDCP 2.0 (NO in block C5), the content receiver 2 decodes the content intact (block C7), and outputs audio data.

As described above, the content transfer system of this embodiment can transfer content, the copyright of which is required to be protected, while applying an appropriate copyright protection method to that content.

## Claims

1. An electronic apparatus (1) **characterized by** comprising:
a content transfer module (100) configured to transfer copyright protected content, wherein:
the content transfer module (100) is configured to:
apply a first copyright protection method to protect a copyright of the content, when the content transfer module transfers the content at a quality level exceeding a threshold; and
apply a second copyright protection method to protect the copyright of the content, when the content transfer module transfers the content at a quality level not more than the threshold.

2. The apparatus (1) of Claim 1, **characterized in that** the content transfer module (100) is configured to:
determine a quality level of the content upon transferring the content to another electronic apparatus which receives the content, based on a setting value associated with a quality level at an encoding timing of the content in the electronic apparatus which transfers the content, and a setting value associated with a quality level at an output timing of the content in the another electronic apparatus;
apply the first copyright protection method to protect the copyright of the content when the determined quality level exceeds the threshold; and
apply the second copyright protection method to protect the copyright of the content when the determined quality is not more than the threshold.

3. The apparatus (1) of Claim 1, **characterized in that** the content transfer module (100) is configured to transfer the content including audio data having a quality level not more than the threshold to another electronic apparatus which receives the content, when the another apparatus is not compatible with audio data protected by the first copyright protection method.

4. The apparatus (1) of Claim 1, **characterized in that**:
the content comprises audio data; and
the content transfer module (100) is configured to determine that the quality level of the content exceeds the threshold, when one or both of the number of quantization bits and a sampling frequency at an encoding timing of the audio data exceeds a first value or values.

5. The apparatus (1) of Claim 4, **characterized in that**:
the content comprises video data; and
the content transfer module (100) is configured to:
apply the first copyright protection method to protect a copyright of the audio data, when the quality level of the audio data exceeds the threshold;
apply the second copyright protection method to protect the copyright of the audio data, when the quality level of the audio data does not exceed the threshold; and
apply the first copyright protection method to the video data irrespective of whether or not the quality level of the audio data exceeds the threshold, when the content is copyright protected.

6. The apparatus (1) of Claim 1, **characterized in that**:
the first copyright protection method comprises a method which includes encryption of copyright protection target data; and
the second copyright protection method comprises a method which does not include any encryption of copyright protection target data.

7. The apparatus of Claim 6, **characterized in that**:
the first copyright protection method comprises High bandwidth Digital Content Protection (HDCP) system 2.0 or a subsequent standard of HDCP 2.0; and
the second copyright protection method comprises a Serial Copy Management System (SCMS).

8. A content transfer method of an electronic apparatus, **characterized by** comprising:
applying (B3) a first copyright protection method to protect a copyright of content, when the content is transferred to have a quality level exceeding a threshold; and
applying (B5) a second copyright protection method to protect the copyright of content, when the content is transferred to have a quality level not more than the threshold.

9. The method of Claim 8, **characterized by** further comprising:
determining (All) a quality level of the content upon transferring the content to another apparatus which receives the content, based on a setting value associated with a quality level at an encoding timing of the content in the electronic apparatus which transmits the content, and a setting value associated with a quality level at an output timing of the content in the another electronic apparatus; and
applying (B3) the first copyright protection method to protect the copyright of the content when the determined quality exceeds the threshold; and
applying (B5) the second copyright protection method to protect the copyright of the content when the determined quality level is not more than the threshold.

10. The method of Claim 8, **characterized by** further comprising transferring (NO in B2, B4, B5) the content to another apparatus which receives the content having a quality level not more than the threshold, when the another apparatus is not compatible with the first copyright protection method.

11. The method of Claim 8, **characterized in that**:
the content comprises audio data; and
the method **characterized by** further comprises determining (B1) that the quality level of the content exceeds the threshold, when one or both of the number of quantization bits and a sampling frequency at an encoding timing of the audio data exceeds a first value or values.
